# FASCICULE DE BREVET EUROPEEN

(11) **EP 0 669 597 B1**
(45) Date de publication et mention de la délivrance du brevet: **28.08.2002**
(21) Numéro de dépôt: 95400365.3
(22) Date de dépôt: 21.02.1995
(51) Int. Cl.: G06K 19/077

(54) **Procédé de fabrication d'une carte sans contact**
Verfahren zur Herstellung einer kontaktlosen Karte
Method of manufacturing a contactless card

(30) Priorité: 24.02.1994 FR 9402130
(43) Date de publication de la demande: 30.08.1995
(73) Titulaire: GEMPLUS, 13881 Gémenos Cédex (FR)
(72) Inventeur: Fidalgo, Jean Christophe, F-75116 Paris (FR); Oi, Christiane, F-75116 Paris (FR)

(56) Documents cités:
- EP-A- 0 564 051
- EP-A- 0 570 784
- DE-A- 4 243 654
- FR-A- 2 622 323
- FR-A- 2 665 280

## Description

L'invention concerne un procédé de fabrication d'une carte sans contact munie d'un module électronique comprenant une puce à circuit intégré reliée à une antenne. De telles cartes sont destinées à la réalisation de diverses opérations, telles que, par exemple, des opérations bancaires, des communications téléphoniques, ou diverses opérations d'identification. Ces opérations s'effectuent grâce à un couplage électromagnétique à distance entre le module électronique de la carte et un appareil récepteur ou lecteur. Le couplage peut être réalisé en mode lecture ou en mode lecture/écriture.

La présente invention ne concerne pas uniquement les cartes ayant un fonctionnement exclusivement sans contact. Elle concerne en outre des cartes mixtes ou hybrides, qui ont la possibilité de fonctionner selon les deux modalités : sans contact et par contacts. Ces cartes mixtes sont destinées, par exemple, à des opérations du type télébillétique, dans lesquelles elles sont débitées à distance d'un certain nombre d'unités lorsqu'elles passent au voisinage d'une borne (fonctionnement sans contact) et, dans lesquelles elles sont rechargées dans un distributeur compatible avec les cartes à puce standards (fonctionnement par contacts).

Telles qu'elles sont réalisées actuellement, les cartes sans contact sont des objets portables de dimensions normalisées. La norme usuelle ISO 7810 correspond à une carte de format standard de 85 mm de longueur, de 54 mm de largeur, et de 0,76 mm d'épaisseur. Chaque carte comporte un corps de carte réalisé par un assemblage de feuilles ou de feuillets plastiques, et, noyé dans cet assemblage, un module électronique comprenant une puce à circuit intégré reliée à une antenne du type bobine d'inductance selon au moins deux bornes de connexion. La puce comporte une mémoire, et pourrait, dans certains cas, comporter un microprocesseur. Les dimensions du module électronique sont sensiblement inférieures aux dimensions de la carte. La position du module électronique dans la carte, n'a, relativement aux cartes avec contact, qu'une importance moindre. Cette position est cependant un paramètre important, si l'on considère la résistance de la carte à des sollicitations mécaniques en flexion ou en torsion. En effet, pour minimiser les contraintes transmises au module, il est préférable de le positionner dans l'un des coins de la carte.

On connaît des procédés de réalisation de cartes sans contact par la technique de colamination à chaud. Ces procédés consistent à disposer entre les deux plateaux d'une presse, un empilement de feuilles thermoplastiques au milieu duquel on positionne un module électronique sans contact. On effectue ensuite le soudage de ces feuilles thermoplastiques en appliquant des contraintes de pression et température.

Du fait des différences de coefficient de dilatation entre les matériaux utilisés, l'action combinée de la pression et de la température engendre une déformation résiduelle à la surface de la carte en regard du module électronique. La carte obtenue n'est pas esthétique.

Le brevet EP 0 570 784 décrit un procédé de fabrication d'une carte sans contact correspondant au préambule de la revendication 1, ledit procédé comportant notamment une étape selon laquelle on dispose un module électronique au fond d'une cavité d'un cadre de positionnement et une étape selon laquelle on découpe la carte de manière à conserver une portion de cadre de positionnement dans la carte.

On connaît des procédés de réalisation de cartes sans contact selon lesquels : on dépose un cadre, par exemple, rectangulaire, circulaire, ou oblong, sur une feuille thermoplastique inférieure, on dépose un module électronique connecté à une antenne à l'intérieur d'une cavité formée par ledit cadre et ladite feuille inférieure, puis on coule une résine thermodurcissable dans cette cavité avant de la recouvrir d'une feuille thermoplastique supérieure. Les faces supérieure et inférieure du cadre, respectivement dirigées vers la feuille de thermoplastique supérieure et vers la feuille thermoplastique inférieure, ont un relief bosselé ou alvéolé. En conséquence, les chants de la carte obtenue par de tels procédés montrent non seulement, une bande supérieure constituée par la feuille thermoplastique supérieure et une bande inférieure constituée par la feuille thermoplastique inférieure, mais aussi, entre ces deux bandes, une bande sinusoïdale. Les sommets de la bande sinusoïdale viennent au contact des bandes supérieure et inférieure. Les espaces compris entre la bande sinusoïdale et les bandes supérieure et inférieure sont constitués de résine polymérisée.

La bande sinusoïdale est particulièrement inesthétique. De plus, et considérant le relief bosselé ou alvéolé des faces du cadre, la résine, localisée dans les espaces compris entre la bande sinusoïdale et les bandes supérieure et inférieure, peut, selon les aléas de la découpe du cadre, n'être présente, sur les côtés ou les coins de la carte, qu'à raison d'un très faible volume. Par suite, un choc ou des frottements répétés sur la carte peuvent conduire à écailler ces faibles volumes de résine et éroder ses côtés, ou, plus particulièrement, ses coins.

Aussi, la présente invention a pour but de proposer un procédé de fabrication de cartes sans contact qui pallie les inconvénients précités et qui permette d'obtenir à moindre coût, des cartes sans contact esthétiques, d'un aspect homogène.

Ce but, ainsi que d'autres qui apparaîtront par la suite, sont atteints grâce à un procédé de fabrication d'une carte sans contact selon la revendication 1, selon une caractéristique avantageuse de l'invention, on dispose autour d'un complexe feuille inférieure - couche - feuille supérieure, un second cadre déterminant l'épaisseur finale de la carte.

Par ailleurs, selon un mode préféré de mise en oeuvre de l'invention destiné à la fabrication de cartes en série, le procédé de l'invention est réalisé à l'aide de feuilles thermoplastiques de grande dimension et d'un cadre comportant de multiples fenêtres disposées côte-à-côte et destinées chacune à la fabrication d'une carte.

La description qui va suivre et qui ne présente aucun caractère limitatif, permettra de mieux comprendre la manière dont l'invention peut être mise en pratique.

Elle doit être lue en regard des dessins annexés, dans lesquels :
- la figure 1A illustre le dépôt d'un cadre sur une feuille thermoplastique inférieure, et le positionnement d'un module électronique au fond d'une cavité formée par ledit cadre et ladite feuille, selon le procédé de l'invention ;
- les figures 1B, 1C, 1D, 1E illustrent différentes variantes de modules et d'antennes qui peuvent être mises en oeuvre dans le procédé selon l'invention ;
- la figure 2 illustre le remplissage de la cavité par une résine selon le procédé de l'invention ;
- la figure 3A illustre le recouvrement de la cavité par une feuille thermoplastique supérieure, le fluage de la résine, et le découpage de la carte, selon le procédé de l'invention ;
- la figure 3B illustre le fluage de la résine selon un mode de réalisation particulier du cadre selon le procédé de l'invention ;
- la figure 4 représente la carte obtenue selon le procédé de l'invention ; et
- la figure 5 illustre le procédé selon l'invention, mis en oeuvre dans la fabrication de cartes en série.

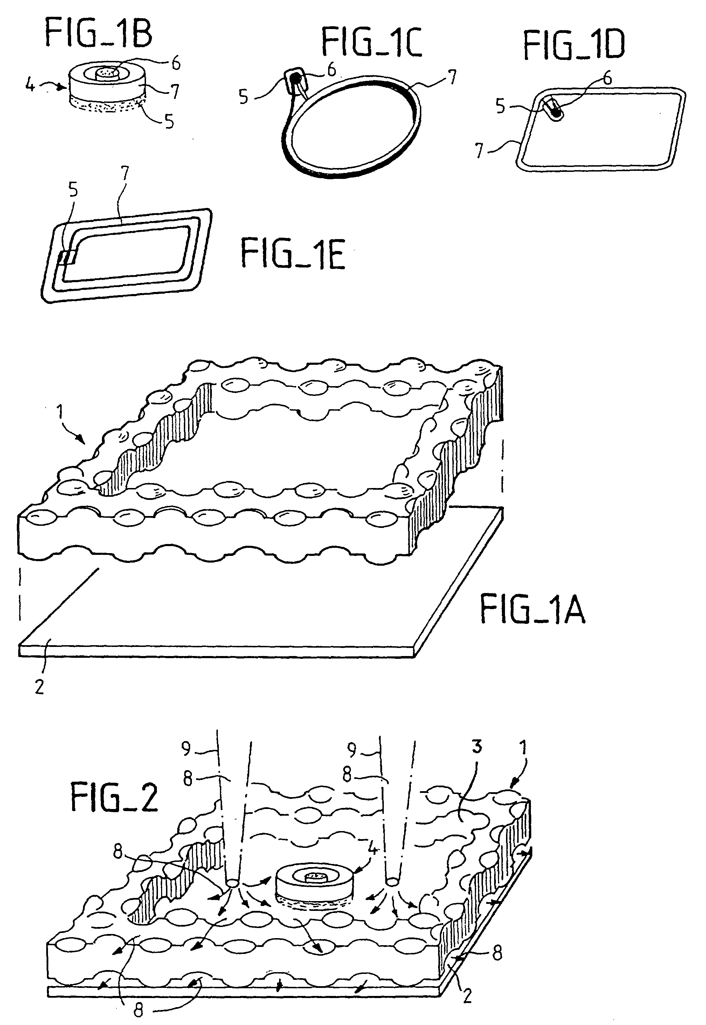

Pour la fabrication d'une carte sans contact, on dépose un cadre référencé 1 sur la figure 1A, sur une feuille thermoplastique inférieure 2 en délimitant alors les bords d'une cavité référencée 3 en figure 2.

La feuille thermoplastique inférieure 2 a une surface sensiblement plus importante que la surface de la carte normalisée que l'on veut fabriquer. Par exemple, pour une carte aux dimensions standards précitées de la norme ISO 7810, la longueur de la feuille thermoplastique 2 est d'environ 100 mm, et sa largeur est d'environ 69 mm. Son épaisseur est d'environ 180 microns.

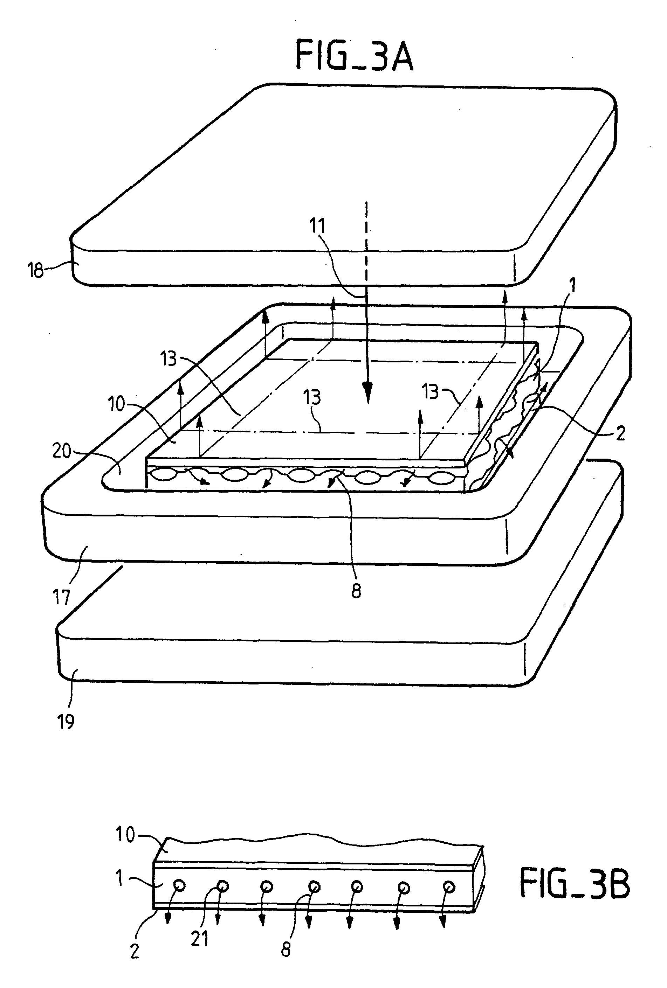

Le cadre 1 présente avantageusement une structure bosselée ou alvéolée, dont le profil se présente, par exemple, sous la forme d'une bande bosselée ou même sinusoïdale. Il est de préférence thermoformé à partir d'un feuillet plastique rectangulaire. Néanmoins, il peut être, aussi, métallique, ce qui permettra éventuellement sa réutilisation ultérieure. Dans ce cas, il sera préférentiellement recouvert d'une couche anti-adhérente, telle que, par exemple, une couche de PTFE (polytétrafluoroéthylène) ou tout autre film de polymère fluoré ou siliconé. Ce feuillet a, avant déformation, une épaisseur hors tout d'environ 150 microns. Après déformation, il a une épaisseur hors tout de l'ordre de 400 microns, soit une épaisseur supérieure au double environ de l'épaisseur du feuillet d'origine. Le cadre 1, est formé par estampage. Il comporte quatre éléments d'encadrement disposés rectangulairement. Ce cadre 1 a une longueur et une largeur voisine de la longueur et de la largeur de la feuille 2. Or, les éléments d'encadrement ont une largeur de l'ordre de 15 mm. Ainsi, la largeur et la longueur de la cavité 3 sont sensiblement égales ou légèrement supérieures à la largeur et à la longueur de la carte à fabriquer.Bien entendu, la structure bosselée n'est pas limitative et le cadre 1 peut présenter, sur ses bords, des trous débouchants référencés 21 en figure 3B reliant les bords intérieurs dudit cadre 1, à ses bords extérieurs.

Alors que le cadre 1 est déposé sur la feuille thermoplastique 2, on positionne un module électronique 4 au fond de la cavité 3. Les figures 1B à 1E représentent des ensembles antenne plus module, selon différentes variantes.

En figure 1B, le module électronique 4 comporte avantageusement un substrat 5 sur lequel on a fixé une puce 6 et, par exemple, une bobine 7. La bobine 7 peut être remplacée par tout autre élément formant antenne en vue d'une transmission électromagnétique d'informations entre un lecteur, non représenté sur les figures, et la puce 6. La figure 1C montre une antenne circulaire et les figures 1D et 1E montrent des antennes rectangulaires. La puce 6 est reliée à la bobine 7, ou l'inverse : positionnement de la puce 6, puis de la bobine 7 par des bornes de connexion. Bien entendu, on peut déposer les différents éléments du module 4, par étapes successives, sur la feuille thermoplastique 2. Par exemple, on peut très bien concevoir un procédé selon lequel on positionne la bobine 7 sur la feuille thermoplastique 2 avant de positionner la puce 6 et de connecter cette dernière à la bobine 7, ou l'inverse : positionnement de la puce 6, puis de la bobine 7. Par ailleurs, le module 4 peut être fixé sur la feuille thermoplastique 2 à l'aide d'une goutte de colle telle que, par exemple, une colle à base de cyanoacrylate. Bien que cela constitue alors une étape supplémentaire dans le procédé, le module 4 est alors maintenu en position stable. En général, l'antenne 7 est positionnée sensiblement à égale distance des bords intérieurs du cadre 1.

Quand le module électronique 4 est positionné au fond de la cavité 3, on remplit cette cavité 3 d'une résine 8.

La résine 8 est avantageusement dispensée dans la cavité 3 par le dessus, par l'intermédiaire de seringues ou de micropipettes dont les embouts sont référencés 9 en figure 2. Le volume de résine 8 dispensée est supérieur au volume de la cavité 3. Ainsi, une fois que la dispense de la résine 8 est terminée, la cavité 3 est totalement remplie. Pendant le remplissage, le flux de résine 8 peut déplacer le module électronique 4 au fond de la cavité 3. Or, un déplacement du module 4 de plus d'un millimètre au fond de cette cavité peut positionner l'antenne 7 en regard des bords de découpe de la carte. Aussi, il est préférable de remplir la cavité 3 en délivrant la résine 8, verticalement, par l'intermédiaire d'un unique embout de seringue disposé au dessus du module 4 et sensiblement au centre du cylindre formé par la bobine 7. Cette solution comporte néanmoins certains inconvénients. En effet, le flux de résine 8 tombant sur le module 4, se répartit au fond de la cavité 3, sous la forme d'un cercle. Le cadre étant rectangulaire, les bords de ce cercle vont atteindre plus rapidement les grands éléments d'encadrement que les petits éléments d'encadrement. La répartition de la résine 8 dans la cavité 3 ne sera donc pas homogène. Par suite, il est particulièrement avantageux de dispenser la résine 8, verticalement, en deux points situés, au fond de la cavité 3, de part et d'autre et à égale distance du module 4, et dans un plan médian du cadre 1 dans le sens de la longueur. Cela évitera ainsi tout déplacement du module 4 et la résine 8 atteindra en même temps les quatre éléments d'encadrement. Cette solution est illustrée en figure 2.

Quand la résine atteint le cadre 1, elle flue au travers des creux et alvéoles de celui-ci et chasse ainsi les bulles d'air.

On choisit de préférence une résine 8 thermodurcissable qui polymérise à une température inférieure à 60°C et à la pression atmosphérique. Une telle résine est avantageusement une résine bicomposant comportant un polyuréthanne qui polymérise dès qu'il est mélangé à un durcisseur. Néanmoins, la température devra rester insuffisante pour ne pas occasionner des déformations résiduelles aux interfaces des différents éléments de la carte.

Dès que la résine 8 a rempli la cavité 3, on recouvre le cadre 1 d'une feuille thermoplastique supérieure 10 sur laquelle on applique une légère pression représentée en figure 3 par une flèche 11. Cette pression peut être appliquée par l'intermédiaire de deux plaques métalliques 18 et 19 que l'on approche l'une de l'autre. Ces deux plaques métalliques 18, 19 sont éventuellement recouvertes d'un matériau anti-adhérent.

La pression verticale 11 est suffisante pour chasser la résine 8 en surplus, à l'extérieur du complexe feuille 2 - cadre 1 - feuille 10, par fluage dans les alvéoles du cadre 1 et au travers de celles-ci. Une pression d'environ un bar suffit à effectuer cette opération correctement sans déplacer le module électronique 4. Si le cadre 1 possède des trous débouchants 21 reliant ses bords intérieurs à ses bords extérieurs, le fluage de la résine 8 s'effectue par lesdits trous 21 (figure 3B).

Dans le cas où le cadre 1 est suffisamment rigide, il sert en fait de cale d'épaisseur en limitant le déplacement vertical de la feuille 10.

Toutefois, dans d'autres cas, on peut disposer, autour du complexe précité, un second cadre métallique 17, déterminant l'épaisseur finale de la carte. Les cartes obtenues sont alors égales en épaisseur.

Le second cadre 17 délimite une cavité 20 dont la profondeur est avantageusement égale à l'épaisseur de la carte que l'on veut obtenir, c'est-à-dire, en pratique, pour une carte conforme à la norme usuelle ISO 7810, égale à 0,76 mm environ. D'autre part, la longueur et la largeur de cette cavité 20 est préférentiellement supérieure à la longueur et la largeur du complexe précité feuille 2 - cadre 1 - feuille 10. Les bords intérieurs du second cadre 17, qui définissent la cavité 20, ne sont pas, alors, en contact avec le complexe précité et la résine 8 chassée à l'extérieur dudit complexe se répand dans l'espace compris entre ce complexe et le cadre 17. Bien entendu, il est possible d'appliquer le second cadre 17 contre le complexe feuille 2 - cadre 1- feuille 10. Toutefois, le cadre 17 présente alors, sur sa tranche, sur ses bords intérieurs, des ouvertures permettant le fluage de la résine 8. Ces ouvertures diminuent cependant la rigidité du second cadre 17.

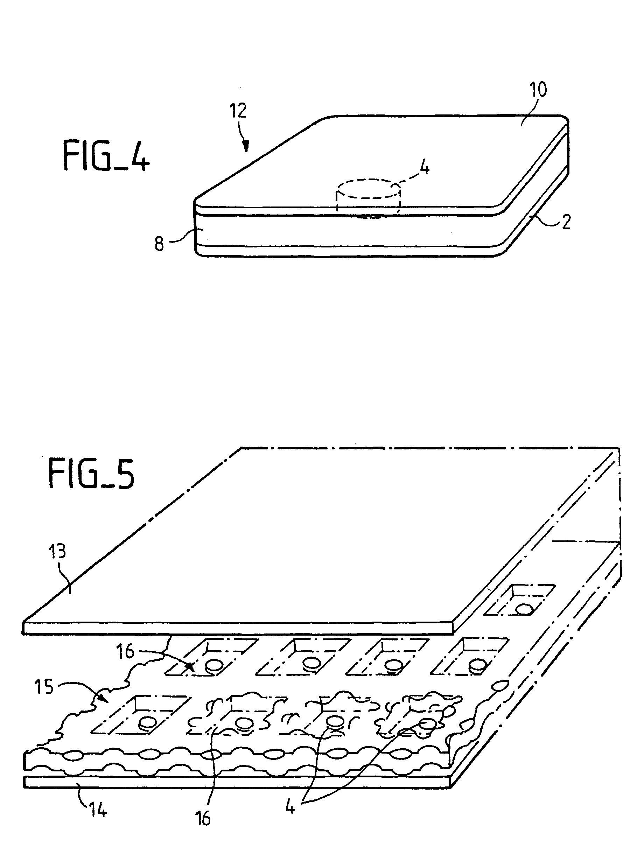

Une fois que la résine 8 est polymérisée, on découpe le complexe précité, en vue d'obtenir une carte référencée 12 en figure 4.

Le découpage est effectué, à l'intérieur du cadre 1, dans la cavité 3, selon les lignes référencées 13 qui sont avantageusement situées à proximité des côtés intérieurs du cadre 1. Cela diminuera la quantité de résidus plastiques éliminés par le procédé de l'invention.

La carte obtenue est rectangulaire 12 et comporte trois épaisseurs : une feuille thermoplastique supérieure 10, une couche de résine 8, et une feuille thermoplastique inférieure 2. Le cadre 1 n'est pas apparent sur le chant de la carte et le module électronique 4 est noyé dans la résine polymérisée 8.

Afin de mettre en oeuvre le procédé de l'invention en grande série, il est particulièrement intéressant d'utiliser des feuilles thermoplastiques 13 et 14 de grande dimension, et un cadre 15 comportant de multiples fenêtres 16, disposées côte-à-côte, et destinées chacune à la fabrication d'une carte. Dans ce cas, la largeur des éléments de cadre définissant la dimension des fenêtres doit être suffisante pour que le fluage de la résine puisse s'effectuer sans encombres. Par exemple, on peut utiliser des feuilles thermoplastiques au format 350 x 500 mm comportant, seize fenêtres 16, à l'origine de seize cartes.

Dans le cas d'une fabrication de cartes sans contact mixtes, le procédé décrit ci-dessus devra être complété par un ensemble d'étapes visant à positionner une interface à contact sur la carte 1.

## Revendications

1. Procédé de fabrication d'une carte (12) sans contact comportant un corps de carte et un module électronique (4) qui comprend une puce (6) à circuit intégré reliée à une antenne (7), dans lequel:
- on dépose un cadre (1) sur une feuille thermoplastique inférieure (2) en délimitant alors les bords d'une cavité (3) ;
- on positionne le module électronique (4) au fond ladite cavité (3) ;
- on remplit cette cavité (3) d'une résine (8) polymérisable ; et
- on recouvre le cadre (1) et la cavité (3) remplie de résine (8) d'une feuille thermoplastique supérieurs (10) sur laquelle on applique une légère pression (11),
**caractérisé en ce que**, une fois que la résine (8) est polymérisée, on découpe la carte (12) à l'intérieur du cadre (1).

2. Procédé selon la revendication 1, **caractérisé en ce qu'**on dispose autour d'un complexe feuille (2) - cadre (1) - feuille (10), un second cadre (17) déterminant l'épaisseur finale de la carte.

3. Procédé selon l'une des revendications 1 ou 2, **caractérisé en ce que** le module électronique (4) est positionné au fond de la cavité (3) avec collage.

4. Procédé selon l'une des revendications précédentes, **caractérisé en ce que** la résine (8) est dispensée dans la cavité (3) par le dessus de celle-ci.

5. Procédé selon une des revendications précédentes, **caractérisé en ce que** la résine (8) est dispensée verticalement dans la cavité (3).

6. Procédé selon l'une des revendications précédentes, **caractérisé en ce que** la résine (8) est dispensée en deux points situés, sensiblement de part et d'autre du module (4), dans le plan médian au cadre (1) dans le sens de la longueur.

7. Procédé selon l'une des revendications précédentes, **caractérisé en ce qu'**il est réalisé à une température inférieure à 60°C environ, et supérieure ou égale à la température de polymérisation de la résine (8).

8. Procédé selon l'une des revendications précédentes, **caractérisé en ce que** la résine (8) utilisée est une résine polyuréthanne bicomposant.

9. Procédé selon l'une des revendications précédentes, **caractérisé en ce que** la pression appliquée à la seconde feuille (10) est de l'ordre de 1 bar.

10. Procédé selon l'une des revendications précédentes, **caractérisé en ce que** les faces de dessus et de dessous du cadre (1) ont une structure alvéolaire en vue de permettre le fluage de la résine (8) sous l'effet de la pression appliquée.

11. Procédé selon l'une des revendications précédentes, **caractérisé en ce que** le cadre (1) présente des trous débouchants (21) reliant les bords intérieurs dudit cadre (1), à ses bords extérieurs.

12. Procédé selon l'une des revendications précédentes, **caractérisé en ce qu'**il est réalisé à l'aide de feuilles thermoplastiques (13, 14) de grande dimension et d'un cadre (15) comportant de multiples fenêtres (16) disposées côte-à-côte, et destinées chacune à la fabrication d'une carte.

13. Procédé selon l'une des revendications 2 à 12, **caractérisé en ce que** le second cadre (17) délimite une cavité (20) dont la profondeur est égale à l'épaisseur de la carte obtenue.

14. Procédé selon l'une des revendications 2 à 13, **caractérisé en ce que** le second cadre (17) délimite une cavité (20) dont la largeur et la longueur est supérieure à la longueur et la largeur du complexe feuille (2) - cadre (1) - feuille (10).

## Patentansprüche

1. Herstellungsverfahren einer Karte (12) ohne Kontakt, umfassend einen Kartenkörper und ein elektronisches Modul (4), das einen Chip (6) mit mit einer Antenne (7) verbundenem integriertem Schaltkreis umfasst, in dem:
- man einen Rahmen (1) auf einer unteren thermoplastischen Folie (2) durch Begrenzen der Ränder einer Vertiefung (3) einsetzt;
- man das elektronische Modul (4) im Boden der besagten Aussparung (3) positioniert;
- man diese Vertiefung (3) mit einem polymerisierbaren Harz (8) ausfüllt; und
- man den Rahmen (1) und die mit Harz (8) aufgefüllte Vertiefung (3) mit einer oberen thermoplastischen Folie (10) abdeckt, auf die man einen leichten Druck ausübt;
**dadurch gekennzeichnet, dass**, sobald das Harz (8) polymerisiert ist, man die Karte (12) im Innern des Rahmens (1) ausschneidet.

2. Herstellungsverfahren gemäß Anspruch 1, **dadurch gekennzeichnet, dass** man um einen Komplex Folie (2) - Rahmen (1) - Folie (10) einen die endgültige Stärke der Karte bestimmenden zweiten Rahmen (17) anordnet.

3. Verfahren gemäß Anspruch 1 oder 2, **dadurch gekennzeichnet, dass** das elektronische Modul (4) am Boden der Vertiefung (3) durch Verkleben positioniert ist.

4. Verfahren gemäß einem der vorherigen Ansprüche, **dadurch gekennzeichnet, dass** das Harz (8) in der Vertiefung (3) von der Oberseite derselben ausgegeben wird.

5. Verfahren gemäß einem der vorherigen Ansprüche, **dadurch gekennzeichnet, dass** das Harz (8) vertikal in der Vertiefung (3) ausgegeben wird.

6. Verfahren gemäß einem der vorherigen Ansprüche, **dadurch gekennzeichnet, dass** das Harz (8) in zwei Punkten ausgegeben wird, die sich deutlich auf jeder Seite des Moduls (4) in der mittleren Ebene zum Rahmen (1) in Längsrichtung befinden.

7. Verfahren gemäß einem der vorherigen Ansprüche, **dadurch gekennzeichnet, dass** es bei einer Temperatur von ungefähr unter 60°C und über oder gleich der Polymerisationstemperatur des Harzes (8) realisiert wird.

8. Verfahren gemäß einem der vorherigen Ansprüche, **dadurch gekennzeichnet, dass** das verwendete Harz (8) ein Bikomponenten-Polyurethan-Harz ist.

9. Verfahren gemäß einem der vorherigen Ansprüche, **dadurch gekennzeichnet, dass** der auf die zweite Folie (10) ausgeübte Druck in der Größenordnung von 1 bar liegt.

10. Verfahren gemäß einem der vorherigen Ansprüche, **dadurch gekennzeichnet, dass** die Ober- und Unterseiten des Rahmens (1) eine zellenförmige Struktur haben, um das plastische Fließen des Harzes (8) unter der Wirkung des ausgeübten Drucks zu erlauben.

11. Verfahren gemäß einem der vorherigen Ansprüche, **dadurch gekennzeichnet, dass** der Rahmen (1) an seinen äußeren Rändern die inneren Ränder des besagten Rahmens (1) verbindende einmündende Löcher (21) aufweist.

12. Verfahren gemäß einem der vorherigen Ansprüche, **dadurch gekennzeichnet, dass** es mittels thermoplastischer Folien (13, 14) mit großen Abmessungen und einem Rahmen (15) realisiert wird, der zahlreiche Fenster (16) umfasst, die nebeneinander angeordnet sind und von denen jedes zur Herstellung einer Karte bestimmt ist.

13. Verfahren gemäß Anspruch 2 bis 12, **dadurch gekennzeichnet, dass** der zweite Rahmen (17) eine Vertiefung (20) abgrenzt, deren Tiefe gleich der Stärke der erhaltenen Karte ist.

14. Verfahren gemäß Anspruch 2 bis 13, **dadurch gekennzeichnet, dass** der zweite Rahmen (17) eine Vertiefung (20) begrenzt, deren Breite und Länge größer sind als die Länge und Breite des Komplexes Folie (2) - Rahmen (1) - Folie (10).

## Claims

1. A method for manufacturing a contactless card (12) having a card body and an electronic module (4) which comprises an integrated circuit chip (6) connected to an antenna (7), in which:
- a frame (1) is placed on a bottom thermoplastic sheet (2), then delimiting the edges of a cavity (3);
- the electronic module (4) is positioned at the bottom of the said cavity (3);
- this cavity (3) is filled with a polymerisable resin (8); and
- the frame (1) and the cavity (3) filled with resin (8) is covered with a top thermoplastic sheet (10) to which a slight pressure (11) is applied,
**characterised in that**, once the resin (8) is polymerised, the card (12) is cut inside the frame (1).

2. A method according to Claim 1, **characterised in that** a second card (17) determining the final thickness of the card is disposed around a complex consisting of sheet (2), frame (1) and sheet (10).

3. A method according to one of Claims 1 or 2, **characterised in that** the electronic module (4) is positioned at the bottom of the cavity (3) with gluing.

4. A method according to one of the preceding claims, **characterised in that** the resin (8) is dispensed in the cavity (3) through the top thereof.

5. A method according to one of the preceding claims, **characterised in that** the resin (8) is dispensed vertically in the cavity (3).

6. A method according to one of the preceding claims, **characterised in that** the resin (8) is dispensed at two points situated, substantially on each side of the module (4), in the mid-plane to the frame (1) in the direction of the length.

7. A method according to one of the preceding claims, **characterised in that** it is carried out at a temperature of less than approximately 60°, and greater than or equal to the polymerisation temperature of the resin (8).

8. A method according to one of the preceding claims, **characterised in that** the resin (8) used is a two-component polyurethane resin.

9. A method according to one of the preceding claims, **characterised in that** the pressure applied to the second sheet (10) is around 1 bar.

10. A method according to one of the preceding claims, **characterised in that** the top and bottom faces of the frame (1) have an alveolar structure with a view to allowing the flow of the resin (8) under the effect of the pressure applied.

11. A method according to one of the preceding claims, **characterised in that** the frame (1) has opening-out holes (21) connecting the internal edges of the said frame (1) to its external edges.

12. A method according to one of the preceding claims, **characterised in that** it is implemented by means of large thermoplastic sheets (13, 14) and a frame (15) having multiple windows (16) disposed side by side, and each intended for manufacturing a card.

13. A method according to one of Claims 2 to 12, **characterised in that** the second frame (17) delimits a cavity (20) whose depth is equal to the thickness of the card obtained.

14. A method according to one of Claims 2 to 13, **characterised in that** the second frame (17) delimits a cavity (20) whose width and length is greater than the length and width of the complex consisting of sheet (2), frame (1) and sheet (10).
